# EUROPÄISCHE PATENTSCHRIFT

(11) **EP 2 703 361 B1**
(45) Veröffentlichungstag und Bekanntmachung des Hinweises auf die Patenterteilung: **30.09.2020**
(21) Anmeldenummer: 13173348.7
(22) Anmeldetag: 21.06.2006
(51) Int. Cl.: C02F 1/66, B01D 53/34, B01J 20/04, D21C 5/02, D21C 9/10, C02F 11/00

(54) **VERWENDUNG VON ASCHE ALS ALTERNATIVES ALKALISIERUNGSMITTEL**
USE OF ASH AS AN ALTERNATIVE ALKALISING AGENT
UTILISATION DE CENDRE COMME MOYEN D'ALCALINISATION ALTERNATIF

(30) Priorität: 24.06.2005 DE 102005029500
(43) Veröffentlichungstag der Anmeldung: 05.03.2014
(62) Teilanmeldung aus: 06818206.2
(73) Patentinhaber: UPM-Kymmene Corporation, 00100 Helsinki (FI)
(72) Erfinder: Hilbert, Heiko, 87600 Kaufbeuren (DE)
(74) Vertreter: Hoffmann Eitle

(56) Entgegenhaltungen:
- DD-A1- 148 945
- DE-A1- 3 732 329
- DE-A1- 10 107 941
- DE-A1- 10 130 791
- US-A- 4 530 765
- US-A- 5 417 861
- US-A- 5 645 730
- DATABASE WPI Week 198815 Thomson Scientific, London, GB; AN 1988-103395 XP002405305, & RO 92 890 A2 (COMB PRELUC LEMNULU) 30. November 1987 (1987-11-30)
- DATABASE WPI Week 199112 Thomson Scientific, London, GB; AN 1991-085787 XP002405307, & SU 1 560 483 A1 (IVAN ENG-CONS INST) 30. April 1990 (1990-04-30)

## Beschreibung

Die vorliegende Erfindung betrifft die Verwendung von Asche zur Alkalisierung eines wässrigen Systems, wobei das wässrige System ausgewählt ist aus einer Gruppe bestehend aus industriellen, kommunalen und häuslichen Abwässern

In industriellen, kommunalen und häuslichen Systemen werden für verschiedene Anwendungen Alkalisierungsmittel (z.B. NaOH, KOH, MgO, CaO) oder aber Puföfersubstanzen, wie beispielsweise Na₂CO₃/NaHCO₃ oder Na-Silikate eingesetzt. Der Einsatz konventionelle Alkalisierungsmittel ist jedoch mit erheblichen finanziellen Aufwendungen verbunden, so dass Alternativen gesucht werden, die bei vergleichbaren oder besseren Alkalisierungs- und Pufferungseigenschafter kostengünstig einsetzbar sind.

RO 92 890 A2 (COMB PRELUC LEMNULU) 30 November 1987 offenbart die Verwendung von Asche durch Zugabe von 0.15 Gew.-% Asche zu saurem Abwasser aus einer holzverarbeitenden Fabrik, um den pH-Wert von 5 auf einen pH-Wert von 7 einzustellen um das Abwasser zu neutralisieren.

US 5 645 730 A (MALACHOSKY EDWARD) 8 Juli 1997 offenbart die Erhöhung des pH-Wertes von sauren Abwässern auf einen pH-Wert höher als 7 durch Verwendung von 10 oder 20 Gew.-% Flugasche.

SU 1 560 483 A1 (IVAN ENG-CONS INST) 30 April 1990 offenbart die Verwendung von Asche zur Behandlung von einem Abwasser und Erhöhung des pH-Wertes auf einen pH-Wert höher als 7.

DE 37 32 329 A1 (HOELTER HEINZ) 13 April 1989 offenbart die Verwendung von Flugasche zur Aufbereitung von Abwässern, wobei die Flugasche zum Abwasser gegeben wird, und somit der pH-Wert des Abwassers auf einen pH-Wert höher als 8 eingestellt wird.

US 4 530 765 A (SABHERWAL INDERJIT H) 23 Juli 1985 offenbart die Zugabe von calciniertem Feinstaub aus Flugasche oder Kohlenasche zu einem Abwasser.

DD 148 945 A1 (HEINZ ALFRED) 17 Juni 1981 offenbart die Zugabe von Kraftwerksasche zu einem Brüdenwaschwasser zur Einstellung eines pH-Werts von 6,5 bis 8,0.

In der vorliegenden Erfindung werden herkömmliche Alkalisierungsmittel durch Asche ersetzt. Unter Asche sind erfindungsgemäß Industrie- und Verbrennungsaschen sowie Rückstände (z.B. nach thermischer Nachbehandlung (Nachverbrennung) der Asche zu verstehen.

Systeme, in denen Alkalisierungsmittel verwendet werden können, sind zum Beispiel alkalische Bleichen von Altpapier, Holzfasern oder Textilmaterialien jeglicher Art. Ebenfalls zu erwähnen ist der Einsatz von Asche oder aufbereiteter Asche bei der alkalischen Wäsche von Rauchgasen oder zur Stabilisierung von Klärschlämmen und sonstigen Reststoffen und Abfällen, die entweder weiterverarbeitet oder über eine gewisse Zeit zwischengelagert werden müssen (z.B. bis zur Verbrennung). Reststoffe können beispielsweise Faserbruchstücke, Farbpartikel, Füllstoffe, Kleber, Plastikreste, Metallsalze und Säuren jeglicher Art sein sowie Mischungen dieser Komponenten.

Durch die Nutzung der Alkalität der Aschen oder ihrer Derivate können herkömmliche Alkalien oder Pufferchemikalien ganz oder teilweise subsituiert werden. Es wurde im Rahmen der Realisierung der vorliegenden Erfindung überraschend herausgefunden, dass die oben genannten Aschen oder Derivate in der Lage sind, herkömmliche Alkalien zu substituieren und hiermit eine kostengünstige Alternative zu bekannten Verfahren herzustellen, wodurch die Hauptaufgabe der vorliegenden Erfindung gelöst werden konnte. Weitere Vorteile der erfindungsgemäßen Verwendung von Asche oder Derivaten von Aschen werden in der folgenden Beschreibung deutlich.

### Kurze Beschreibung der Zeichnungen

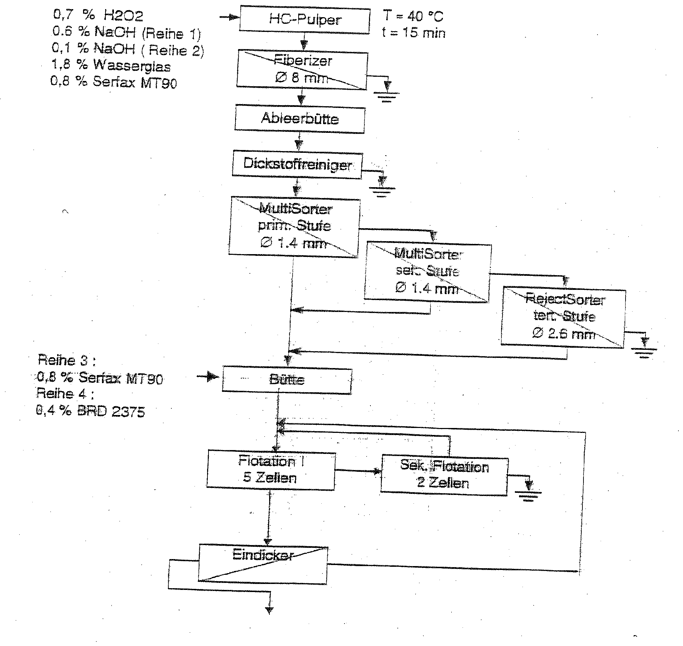

Figur 1 zeigt die Versuchanordnung im Technikum einer Deinkinganlage. Die Deinkingware wird zusammen mit einer Lösung (siehe Beispiel 1, infra) in den HC-Pulper gegeben. In den nachgeschalteten Stufen (Fiberizer, MultiSorter und Reject Sorter) findet eine Vorsortierung der behandelten Deinkingware statt. Anschließend erfolgt eine Vorflotation und abschließend die Eindickung.

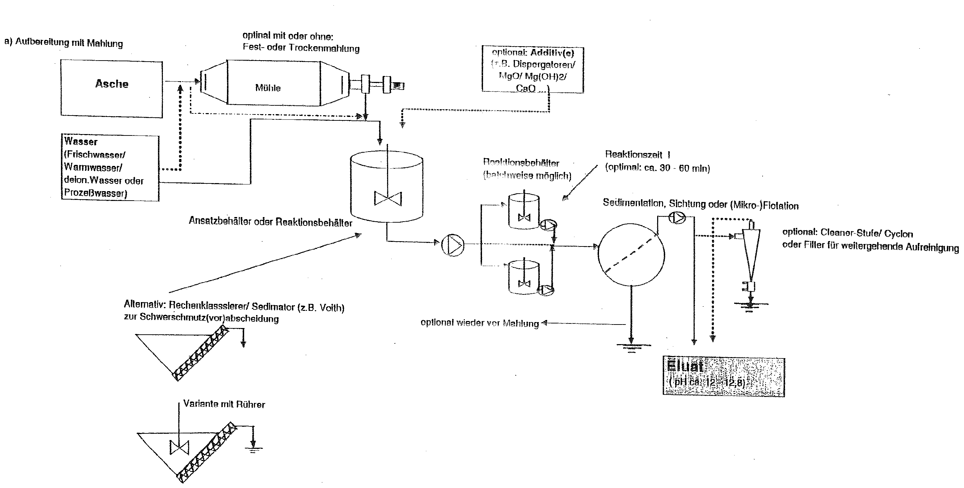

Figur 2 zeigt die Ascheaufbereitung zur Eluatherstellung mit Mahlung. Die ursprünglich erhaltene Asche wird in einer Mühle gemahlen, wobei gegebenenfalls vor oder nach der Mahlung Wasser zur gemahlenen Asche zugegeben werden kann. Anschließend gelangt die gemahlene Asche in einen Ansatz- oder Reaktionsbehälter zur Aufschlämmung. Gegebenenfalls können in diesem Schritt Additive, wie Dispergatoren, MgO, Mg(OH)₂ oder CaO zugegeben werden, so dass der Ansatzbehälter dann auch als Vorreaktionsbehälter genutzt werden kann. Alternativ zum Ansatzbehälter kann auch ein Rechenklassierer/Sedimator zur Schwerschmutz(vor)abscheidung (mit oder ohne Rührvorrichtung) eingesetzt werden. Ein Batch-Verfahren im Reaktionsbehälter ist ebenfalls möglich. Anschließend erfolgt eine Sedimentation, Sichtung oder (Mikro-)Flotation und gegebenenfalls wird eine Cleaner-Stufe vor dem Erhalt des Eluats (pH-Wert zwischen 12 bis 12,8)zwischengeschaltet.

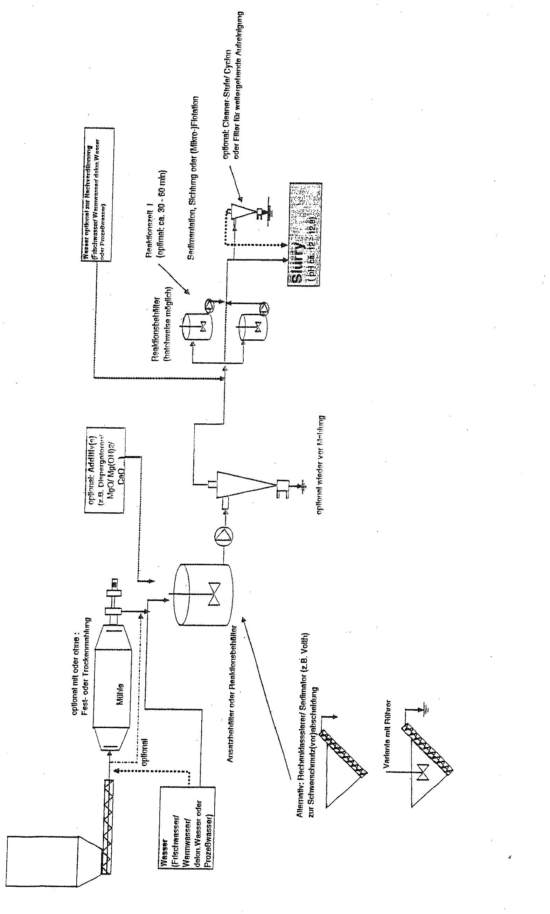

Figur 3 zeigt die Aufbereitung von Aschen zur Slurry-Herstellung. Asche aus einem Heizkraftwerk wurde wie in Figur 2 gezeigt, aufgeschlämmt. Auch hier kann ein batchweises Verfahren verwendet werden. Es folgt eine Sedimentation, Sichtung oder (Mikro-)Flotation. Gegebenenfalls kann die so aufbereitete Asche durch eine Cleaner-Stufe/Cyclon oder einen Filter für die weitergehende Aufbereitung höher aufgereinigt werden, bevor eine Slurry mit einem pH-Wert von ca. 12 bis 12,8 erhalten wird.

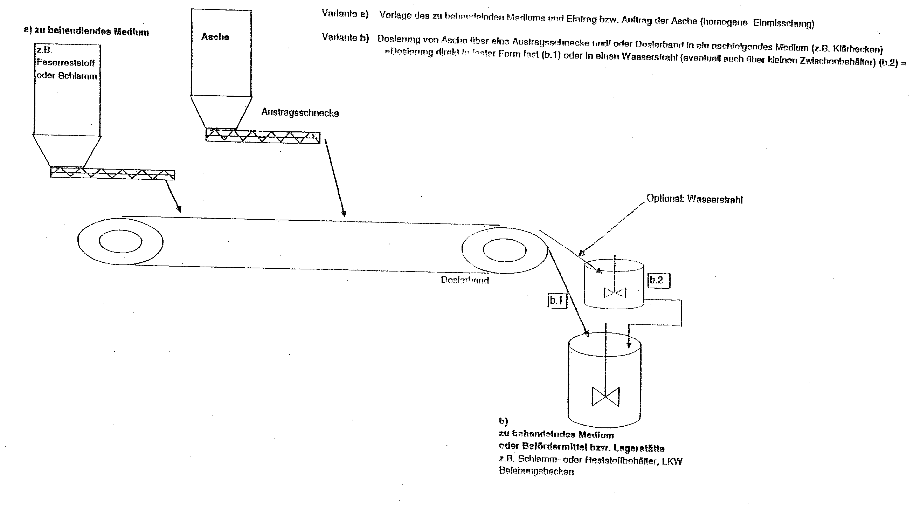

Figur 4 zeigt die Festdosierung bzw. die Festdosierung mit Kurzzeitaufschlämmung von Asche. Das zu behandelnde Medium (a) (z.B. Faserreststoff oder Schlamm) wird auf ein Dosierband geleitet. Nachgeschaltet wird die Asche auf das Dosierband über eine Austragsschnecke zudosiert. In der Variante b1 wird die Asche direkt in fester Form in ein nachfolgendes, zu behandelndes Medium gegeben (bzw. in das Beförderungsmittel oder die Lagerstätte). Das heißt, dass nach Mischung des Mediums (z.B. Faserreststoff) mit der Asche entweder die Ablagerung direkt erfolgt oder die Mischung wird auf ein Förderband gegeben, das z.B. in einen Lagerbehälter fördert oder es erfolgt eine Verladung auf ein Beförderungsmittel (z.B. LKW oder Bahnwaggon, welches die stabilisierte Mischung zum Lagerplatz befördert). In der Variante b2 wird die Asche zunächst in fester Form einem Wasserstahl zugemischt und anschließend in einem separaten Reaktionsbehälter kurzzeitig aufgeschlämmt. Danach erfolgt die Zugabe der aufgeschlämmten Asche zum zu behandelnden Medium, dem Beförderungsmittel bzw. der Lagerstätte.

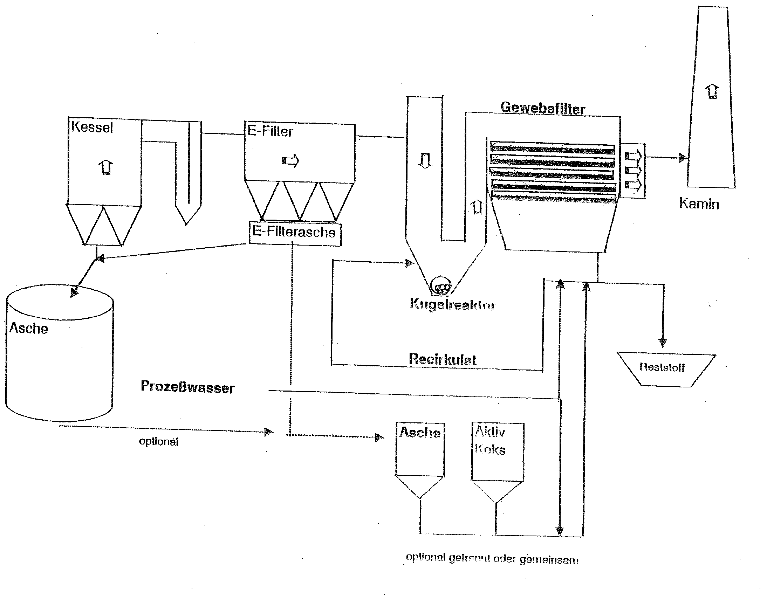

Figur 5 zeigt die Verwendung von Asche in einem Gewebefilter. Die durch die Verbrennung entstehende Asche wird in erster Fraktion am Kessel, in zweiter Fraktion am E-Filter abgezogen und mittels Aschesendern in ein Aschesilo befördert (Mischung von Kessel und E-Filterasche). Es besteht aber auch die Möglichkeit die feinere E-Filterasche direkt abzuziehen und in den Aschevorlagebehälter für die Rauchgasreinigung zu fördern. Das zu behandelnde Rauchgas wird nach Reinigung mittels E-Filter einer Rauchgasnachreinigung (hier Kugelreaktor mit Gewebefilter) zugeführt. Dabei wird normalerweise angefeuchtetes Ca(OH)₂ oder CaO dem Recirkulat nach Gewebefilter zugemischt (ggf. auch Aktivkoks), welches als Adsoptionsmedium für Raugasinhaltsstoffe dient. Anstelle von Ca(OH)₂ oder anderen Adsorbtionsmitteln wurde im vorliegenden Fall Asche bzw. E-Filterasche eingesetzt. Dabei wird das Rauchgas im Kugelrotor mit der angefeuchteten Asche vermengt und zur Reaktion oder Adsorption gebracht, um anschließend in den Gewebefilterschläuchen abgeschieden zu werden. Dadurch werden extrem gute Staub und Gasadsorptionen erhalten, so dass ein weitestgehend aufgereinigtes Abgas den Kamin verlässt.

### Detaillierte Beschreibung der Erfindung

Die Erfinder haben durch intensive Untersuchungen herausgefunden, dass die Verwendung von Asche zur Alkalisierung wässriger Systeme, wobei das wässrige System ausgewählt ist aus einer Gruppe bestehend aus industriellen, kommunalen und häuslichen Abwässern, geeignet ist.

Der Umfang der Erfindung wird durch die angehängten Patentansprüche definiert.

Die erfindungsgemäß verwendeten Aschen umfassen Verbrennungs- und Industrieaschen jeglicher Art. Bevorzugte Aschen sind solche mit hohen Anteilen an CaO, K₂O, Na₂O und MgO (angegeben als Oxide) wie z.B. in Papieraschen oder Holzaschen mit geringen Inertanteilen (z.B. SiO₂) und/oder Schwermetallanteilen. Allgemein wird bevorzugt, dass nur ein geringer Anteil in Wasser oder Prozesswässern (als Lösemittel kommen auch saure oder alkalische und/oder salzhaltige Wässer mit organischen Inhaltsstoffen in Frage) unlöslicher Substanzen in der verwendeten Asche vorhanden ist.

Nicht gemäß der Erfindung werden die Asche aufbereitet, d. h., dass Verbrennungs- oder Industrieaschen bzw. -Rückstände zur Herstellung von Eluaten (mit oder ohne anschließende Abtrennung der festen, rückständigen Asche) oder Aufschlämmungen (Slurries) verwendet werden. Es ist auch möglich, dass eine Aufschlämmung unter Einrühren der Asche in Wasser und sofortige Weiterführung in den Prozess hergestellt wird, so dass die gewünschte alkalische Reaktion erst während des Prozesses erfolgt. Hierbei dient das Wasser als Transportmittel.

Besonders bevorzugt werden chemische oder physikalische Modifizierungen der erfindungsgemäß verwendeten Aschen, die beispielsweise durch die Fällung von Calcium im Eluat, oder den Verschnitt bzw. die Abmischung mit anderen Hilfsmitteln, z.B. Dispergiermitteln wie Natriumacrylat oder Natronlauge oder MgO/Mg(OH)₂, oder auch mit Tensiden, Seifen oder Polymeren, beispielsweise Polyacrylamide/Polydadmac (Polydiallyldimethylammoniumchlorid ist das Grundpolymer der Substanzklasse auf polydadmac-basierender Polymere) u.a., sowie solche, die durch Nachmahlung oder Siebung erhalten werden können.

Unter einer Alkalisierung versteht man im Rahmen dieser Erfindung eine Erhöhung des pH-Werts durch die Zufuhr von Hydroxidionen. Die Reststoffstabilisierung erfolgt beispielsweise bei pH-Werten > 10,5. In diesem pH-Bereich ist die biologische Aktivität von Bakterien und anderen Mikroorganismen deutlich eingeschränkt bzw. kommt komplett zum erliegen.

Bei der Altpapieraufbereitung, erfolgt die Faserquellung optimal im pH-Bereich zwischen 8,5 und 9,5. Die Alkalisierung führt zu einem im basischen Bereich liegenden pH-Wert.

Die erfindungsgemäß verwendete Asche wird in einer Menge, die 0,001 bis 1 Gew.-% des Gewicht des wässerigen Systems zugefügt. Besonders bevorzugt können folgende Mengen der zu verwendenden Asche angegeben werden: bei der Stabilisierung von Abwasser wurden ca. 2 bis 6 t Asche pro Tag und ca. 14500m³/d eingesetzt, dies entspricht in etwa 0,01 bis 0,04% bezogen auf Abwasser. Denkbarer Range: 1 bis 15 t/d entsprechend: 0,007 bis 1%.

In einer Ausführungsform nicht gemäß der Erfindung wird die Asche oder aufbereite Asche zur Pufferung der festen, flüssigen oder gasförmigen Systeme verwendet. Wie oben erwähnt wurde, umfassen die genannten wässerige Systeme industrielle, kommunale und häusliche Abwässer.

Unter einer Pufferung durch die Aschen oder Derivate ist zu verstehen, dass der pH-Wert der oben genannten Systeme nach Zugabe von Asche oder aufbereiteter Asche gegenüber Schwankungen stabilisiert wird. Dies spielt insbesondere eine Rolle bei der Aktivierung von Peroxiden (hier H₂O₂), bei der Farbablösung von Fasern, bei der Faserlösung (Altpapier), bei der Verhinderung von Vergilbungen im beim Bleichen, bei der Vermeidung von Ausfällungen von Klebstoffen bei Veränderungen des pH-Werts, bei der Einstellung des optimalen Reaktionsbereiches chemischer Hilfsmittel, bei der Einstellung des Kalk-Kohlensäure-Gleichgewichts, bei der Einstellung bestimmter Flockengrößen für die Flotation z.B. von Schmutzpartikeln (unter anderem in Kombination mit ausgewählten Seifen), bei der Pufferung und/oder Neutralisierung von u.a. biologisch erzeugter Säuren, oder bei der Einstellung von stabilen Faserstoffeigenschaften zur Maschine (bei Hilfsmittelzugabe) .

In einer weiteren Ausführungsform nicht gemäß der Erfindung wird Asche oder aufbereitete Asche in Filteranlagen (z. B. in Schlauchfiltern, Gewebefiltern etc.) als Adsorptionamittel in flüssiger oder fester Phase zur Reduzierung von Ausgasungen sauerer Bestandteilen, wie beispielsweise H₂S, verwendet. Die Substituierung herkömmlicher Alkalisierungsmittel durch die erfindungsgemäße verwendete Aschen haben mehrere unerwartete Befunde ergeben.

So wurde überraschend herausgefunden, dass eine Überalkalisierung der Systeme bei der erfindungsgemäßen Verwendung von Asche als Alkalisierungsmittel durch Ausbildung eines chemischen Gleichgewichts nicht auftritt. Der Grund hierfür scheint darin zu liegen, dass vor allem bei einer Zudosierung der Asche in Form einer Aufschlämmung immer nur genau die benötigte Alkalimenge nachgelöst wird. Dadurch kommt es insbesondere nicht zu einer ungewollten Alkalivergilbung bei der Bleiche von Fasern und/oder zu Faserquellungen.

Ein weiterer Vorteil der vorliegenden Erfindung liegt darin, dass es bei der erfindungsgemäßen Verwendung von Asche oder deren Aufbereitungen als Alkalisierungsmitteln zu einem geringeren chemischen Sauerstoffbedarf (CSB) bzw. TOC (Total Organic Carbon = Gesamter organischer Kohlenstoff), BSB (biologischer Sauerstoffbedarf) kommt. Der Chemische Sauerstoffbedarf ist ein Summenparameter zur Ermittlung der gelösten oxidierbaren organischen Substanzen. Die Bestimmung des CSB in mg O₂/l erfolgte mit Hilfe von Standardverfahren gemäß dem Fachmann bekannter DIN EN ISO-Vorschriften. Hierdurch werden sowohl industrielle, kommunale oder häusliche Verfahren selbst, wie auch die in dem Verfahren verwendeten Anlagen, beispielsweise Abwasser- oder Reststoffanlagen, weniger belastet. Zu den Belastungen zählt man gelöste oder kolloidal gelöste (meist organische) Störsubstanzen die den Prozess durch Nebenreaktionen stören sowie Herauslösungen von Klebstoffen, die später wieder an ungewünschter Stelle ausfallen.

Ein weiterer unerwarteter Vorteil der erfindungsgemäßen Verwendung liegt darin, dass es zu einer gezielten Vermeidung ungewollter Ablagerungen von Störsubstanzen kommt, beispielsweise an Mahlaggregaten oder an Leitungen, bzw. dass diese Ablagerungen in unkritische Bereiche verlagert werden können.

Ferner liegt ein Vorteil der Erfindung darin, dass durch die erfindungsgemäße Verwendung von Asche eine entschäumende Wirkung in Abwasser oder Wassersystemen erzielt werden kann. Im Fall einer Altpapieranlage kann das anhand einer quantitativen Umsetzung mit folgender Bildung von Ca-Seife erkannt werden. Calciumseifen sind das gewünschte Flotationshilfsmittel für den Austrag der Farbpartikel. Die Messung erfolgt z.B. durch sequentielle Extraktion und anschließender IR-Spektroskopie Des Weiteren wird bei einer Kombination der erfindungsgemäß verwendeten Aschen mit HNO₃ (bei der Aufschlämmung vor Reaktionsbehälter für die Dispergierbleiche) zudem die anaerobe Zersetzung schwefelhaltiger Verbindungen zu H₂S und Mercaptanen in wässrigen Systemen verhindert. Eine Zugabe von HNO₃ ist optional.

Außerdem konnte Vorteilhafterweise im Rahmen der vorliegenden Erfindung gezeigt werden, dass der Zusatz von Asche zur Einstellung von Systemen auf gewünschte Härtegrade verwendet werden kann (z.B. in Altpapieraufbereitungssystemen mit geringen Wasserhärten zur Optimierung der Bleichergebnisse, da für eine optimale Druckfarbenentfernung Härtegrade von 10 bis 25°dH nötig sind (Optimum bei ca. 20°dH)) . Dadurch kann der Einsatz von CaCl₂ zur Aufhärtung entfallen. Dies ist vor allem in Gegenden geringer Wasserhärten sinnvoll.

Im Folgenden werden nicht begrenzende Beispiele dargetan, die der Verdeutlichung der Erfindung dienen.

### BEISPIELE

Die Asche, die den nachfolgenden Beispielen zugrunde liegt, wird in einem 56 MW Heizkraftwerk mit Wirbelschichtkessel durch Verbrennung von Faserreststoffen (Fasern, die im Altpapieraufbereitungssystem als Verluste anfallen) sowie Altholz und Sägespänen erhalten. Des Weiteren sind entfernte Farbpartikel und aussortierte Kunststoffe aus dem Altpapier im Brenngut enthalten. Die Asche besteht im Wesentlichen aus ca. 48% CaO (Freikalkanteil ca. 8%), 5% MgO, 14% Al₂O₃, 1% Na₂O, 0,2% K₂O, 35% SiO₂ und typischen Nebenbestandteilen der Asche.

### Beispiel 1 nicht gemäß der Erfindung:

### Alkalisierung von Deinkingware durch Asche-Eluat anstelle von NaOH

In einem Deinking-Technikum eines Papiermaschinenherstellers wurde maschinell sortierte Deinkingware (gemischte Haushaltssammelware (ca. 40 bis 60% Zeitungen und 40 bis 60% Magazinpapiere und Kataloge) mit einer Standardzusammensetzung für das Deinking behandelt. Dabei kamen auf 2 Tonnen ofengetrockneten Stoffeintrag 0,6% NaOH (100%ig), 0,7% H₂O₂ (100%), Wasserglas 1,8% und 0,8% Seife).

In einem parallelen Versuchsansatz, der unter ansonsten gleichen Bedingungen durchgeführt wurde, wurde NaOH durch Asche-Eluat ersetzt.

Das verwendete Asche-Eluat wurde aus der Asche eines Heizkraftwerkes einer altpapierverarbeitenden Papierfabrik hergestellt. Dazu wurden 20 kg Asche mit 2 m³ Wasser (Frischwasser) aufgeschlämmt. Nachdem der Ansatz 30 min stark gerührt wurde, folgte eine 30-minütige Sedimentierung. Danach wurde das überständige Eluat abgenommen. Das Eluat wies einen pH-Wert von ca. 12,8 auf und wurde ohne weitere Aufbereitung dem Altpapier im Hochkonsistenz-Stoffauflöser (HC-Pulper) zugeführt.

Die Versuchsanordnung im Technikum bestand aus den üblichen Komponenten einer Deinkinganlage (Figur 1):
- Altpapierauflösung im HC-Pulper
- Vorsortierung
- Vorflotation bei ca. 1,1% Stoffdichte (5 Primärzellen und 1 Sekundärzelle)
- Eindickung

Ausgehend von einer Ausgangshelligkeit von Y∼45,8 (gemessen mit dem in den allen relevanten Beispielen eingesetzten Gerät Elrepho (DataColor) 2000/ D65/10° bzw. Filter 110 nm) konnten in bei den Versuchen Endhelligkeiten von 62,4 bzw. 63% erreicht werden. Dabei traten keine signifikanten Abweichungen bei den Farbwerten (CIE ISO 2470 R457/ DIN 5033/5036) sowie der Weiße auf.

Auch alle anderen Stoffaufbereitungsparameter sowie Parameter, die an präparierten Papierproben (sogenannte Laborblätter) nach Standardverfahren durchgeführt wurden (z.B. optische Inhomogenitäten bzw. Schmutzpunkte mit einem Dot Counter (Standard DOMAS-Bildanaysegerät zur Bewertung nach Ingede-Methode 2 (699), die Bewertung optischer Eigenschaften, der Luftdurchlässigkeit (nach Bendtsen, DIN 53108), sowie die Glätte (nach Bekk, DIN 53107), usw.) zeigten keine signifikanten Unterschiede zwischen den beiden Versuchsreihen (NaOH bzw. Asche-Eluat). Damit konnte eindeutig belegt werden, dass NaOH gegen ein Asche-Eluat ausgetauscht werden kann.

Die aus hauptsächlich basischen Komponenten bestehende Asche setzt sich wie folgt zusammen: ca. 48% CaO, 5% MgO, 1%, Na₂O sowie 14% Al₂O₃ und 0,2% K₂O, der Rest besteht aus SiO₂ sowie weiteren aschetypischen Spurenelementen. Die prozentualen Anteile können sich je nach eingesetztem Brennmaterial unterscheiden, bevorzugt werden Aschen mit hohen CaO/MgO/Na₂O/K₂O-Anteilen.

### Beispiel 2 nicht gemäß der Erfindung:

### Verwendung von Asche-Eluat anstelle von NaOH im Deinkingprozess (Großtechnischer Versuch)

In einer altpapierverarbeitenden Papierfabrik, in der in drei Auflösetrommeln bis zu 200 t Altpapier pro Tag verarbeit werden, wurde in drei Versuchsreihen über mehrere Tage erst 20, dann 60 letztlich 100% des Altpapiereintrages mit Asche-Slurry anstelle von NaOH behandelt. Anschließend wurde eine Peroxid-Bleiche im Reaktionsturm und darauf eine Deinking-Flotation durchgeführt.

Es konnte festgestellt werden, dass durch das Deinking mit Asche-Slurry vergleichbare bzw. bessere Ergebnisse in den Fertigstoffen der Erst- und Nachflotation erzielt wurden. Gleichzeitig konnte eine bessere Pufferung des Altpapieraufbereitungssystems erkannt werden (höherer m-Wert; Messverfahren nach DIN 38409H7 (Basekapazität K_{B} 4,3). Die Helligkeiten in den Sekundärsträngen der Flotation waren gleichzeitig geringfügig besser.

Während des gesamten Experiments liefen die drei Papiermaschinen ruhig, und ohne dass in der Produktion oder im System besondere Vorkommnisse bemerkbar waren. Genauer, traten keine Schaumprobleme, Ablagerungen an den Papiermaschinen auf. Ebenso war kein Zusammenbrechen des Schaumes in der Flotation zu beobachten. Es kann jedoch mit speziell abgestimmten Fettsäuren das Schaumverhalten und die Partikelgrößen des zu flotierenden Stoffes eingestellt werden. Mit speziellen Seifen(mischungen) (hier mit NaOH verseifte Fettsäuren) oder Tensiden kann gezielt das Schaum- und Flotationsverhalten (Partikelgrößenspektrum des auszutragenden Schmutzes) beeinflusst werden, so dass entsprechende Helligkeiten und geringe Schmutzpunkte generiert werden. Zudem können die Aufbereitungsverluste minimiert werden.

Die Schmutzpunkte im Papier lagen auf gleichem Niveau wie bei der Verwendung von NaOH. Veränderungen in den Farbwerten a*, b* (mit dem Elrepho 2000-Messverfahren ermittelt) waren nicht zu erkennen.

Die Aufbereitung der Asche erfolgte entsprechend beigefügtem Schema (Figur 2), wobei die Asche nach Bedarf bzw. Verbrauch aus dem Heizkraftwerk (HKW) in ein 50 m³-Bausilo mit Austragsschnecke abgefüllt wurde. Die ausgetragene Asche wurde mit Frischwasser oder mit warmem Prozesswasser in einem Reaktionsbehälter aufgeschlämmt (Aufschlämmstation mit Rührwerk).

Alternativ dazu können auch modifizierte Rechenklassierer mit und ohne Rührwerk erfolgreich eingesetzt werden. Bei der Variante mit Rührwerk konnten (gewünschte) feinere Partikel (vor allem CaO und MgO) in den folgenden Reaktionsbehälter weitergeleitet werden.

Über den Versuchszeitraum wurden Ansätze zwischen 1 bis 14% gefahren, wobei sich geringere Konzentrationen zumeist als günstiger erwiesen.

Ein Vorteil der Verwendung von Rechenkassierern liegt darin, dass es zu einer Abscheidung unerwünschter Grobteilchen (zumeist inertes SiO₂ bzw. Sande) kommt, welche später nicht mehr abgeschieden werden müssen bzw. bei der weiteren Aufbereitung oder aber in der Anlage stören.

Im Reaktionsbehälter wurde eine Reaktionszeit von >30min angestrebt, damit sich der maximale endgültige pH-Wert je nach Zusammensetzung der Asche auf ca. 12,6 bis 13,2 einstellen konnte.

Anschließend wird über eine Sedimentationsstufe mit Feststoffabscheidung und gegebenenfalls angeschlossener Cleanerstufe ein nahezu feststofffreies Eluat mit den oben genannten pH-Werten erhalten. Dieses Eluat wird anstelle von NaOH in die Auflöstrommeln zum Altpapier gegeben. Die Mengen der anderen Bestandteile (wie Standardchemikalien H₂O₂, Wasserglas und Seife)) konnten beibehalten werden oder wurden nur geringfügig verändert.

Die Zugabe von NaOH konnte während der mehrwöchigen Versuche unerwartet um bis zu 80% verringert werden, so dass nur noch der für die Verseifung der Fettsäure notwendige NaOH-Anteil in den Verseifungsprozess geführt werden musste. Das heißt, dass der zur Anhebung des pH-Wertes notwendige NaOH-Anteil durch die auf Asche basierende Alkalität komplett ersetzt werden konnte.

In der Chemikalien-Mischrinne bzw. in den Auflösetrommeln konnte somit der entsprechende pH-Wert von 10,5 bzw. in der Trommel von 9-9,5 gehalten werden.

Während des Versuchs zeitraumes wurden keine Änderungen des pH-Werts des Systems Altpapieranlage bis hin zur Papiermaschine beobachtet.

Mehrtägige Versuche zeigten sogar, dass eine alkalireduzierte Fahrweise bei pH 8,5 bis 8.8 zu keinen geringeren Y- bzw. Weißegraden geführt hat. So betrugen die Helligkeiten vorher 67,6 % und nachher 67,7%.

Die Nachflotationen im Labor mittels Voith-Laborflotationszelle ergaben in allen Fällen annähernd die gleichen Helligkeits- bzw. Weißgradsteigerungen (dY/dWeiße-Werte) sowie Schmutzpunkte (Erstflotation: ca. 750mm²/m² bzw. Nachflotation ca. 500mm²/m² gemessen mit dem dot counter/ Ingede-Methode 4.

Dadurch konnte in der Praxis über einen längeren Zeitraum hin eindeutig bestätigt werden, dass Natronlauge durch Verbrennungsasche ersetzt werden kann.

Über mehrere Monate waren bei visuellen Inspektionen keine Ablagerungserscheinungen zu verzeichnen.

Die Ansätze der Aufschlämmungen wurden während der Versuche zwischen 1 bis 14% variiert, wobei alle die gleiche Wirkungsweise (hinsichtlich der Endhelligkeiten, Schmutzpunkte und Helligkeitsgewinn im Fertigstoff zur Papiermaschine) zeigten. Bei höheren Aschekonzentrationen bzw. -einträgen waren jedoch Entwässerungsschwierigkeiten an den Scheibenfiltern aufgetreten, so dass hauptsächlich Versuche mit 1-5% igen Ansätzen der Asche in der Aufschlämmung durchgeführt wurden. Die spezifischen Asche-Einträge bezogen auf den luftgetrockneten Altpapiereintrag lagen bei 0,3 - 1%. Der Bedarf an hoch aufgeklärtem Asche-Eluat (d.h. abgesetztes oder filtriertem Eluat) ist um ca. 20-30% höher, da über feine CaO-Partikel und andere fein verteilte alkalische Partikel keine alkalisch wirkenden Substanzen in die Aufbereitung eingetragen werden, welche später bei Bedarf freigesetzt werden können.

### Beispiel 3 nicht gemäß der Erfindung:

### Verwendung von Asche-Slurry anstelle von NaOH zur Alkalisierung im Deinkingprozess

In einer altpapierverarbeitenden Papierfabrik, die in drei Auflösetrommeln bis zu 200 Tonnen Altpapier pro Tag verarbeiten, wurden in drei Versuchsreihen über mehrere Tage erst 20%, dann 60% und letztlich 100% des Altpapiereintrages mit Asche-Slurry (Ansatz 30%) anstatt mit NaOH behandelt und einer anschließenden Peroxid-Bleiche mit Reaktionsturm und folgender Deinking-Flotation unterzogen.

Es konnten vergleichbare bis bessere Deinkingergebnisse in den Fertigstoffen der Erst- und Nachflotation festgestellt werden. Gleichzeitig war eine bessere Pufferung des Altpapieraufbereitungssystems zu erkennen (d.h. ein höherer m-Wert) . Die Helligkeiten in den Sekundärsträngen der Flotation waren dabei geringfügig besser.

Die drei Papiermaschinen liefen ruhig, ohne dass besondere Vorkommnisse bei der Produktion oder im System bemerkt wurden. Die Schmutzpunkte im Papier lagen auf gleichem Niveau wie bei Zugabe herkömmlicher Alkalien. Veränderungen in den Farbwerten a*, b* waren nicht zu erkennen.

Asche aus dem Heizkraftwerk wurde anfangs wie in Beispiel 2 in einem Behälter aufgeschlämmt und nach der Umsetzung im Reaktionsbehälter (Eluierung bis pH 12,6 bis 13,2) ohne vorherige Sedimentation und Abtrennung der kolloidalen Festasche als 6 bis 12% ige Slurry in verschiedenen Versuchsschritten über 3 Pumpen mengenbezogen auf den Altpapiereintrag in die Auflösetrommel zudosiert (Figur 3).

Es wurde festgestellt, dass sich der Aschebedarf zur Alkalisierung usw. gegenüber Beispiel 2 deutlich reduzierte, da sich durch CaO/MgO und andere alkalische Kolloide ein OH-Nachlösepotential im Gesamtsystem einstellte. Das war an einem höheren pH-Wert (sowie p- und m-Werten) des aus dem System rückgeführten Verdünnungs- bzw. Auflösewassers zu den Trommeln feststellbar. Dem Altpapier wurde ca. die vierfache Menge an Asche gegenüber 100% iger NaOH zugeführt, d.h. ca. 10 bis 12 Tonnen Asche bezogen auf 2000 Tonnen luftgetrocknetes Altpapier. Diese Menge konnte im Verlauf der Versuche auf 2 bis 3 Tonnen Asche reduziert werden, ohne dass die Wirksamkeit der Auflösung und Bleiche in den Trommeln oder im anschließenden Reaktionsturm mit Aufbereitung verloren wurde.

Deutlich besser, und besonders in Hinblick auf einen wesentlich geringeren Abrieb (100 mg - >12mg nach AT-1000 (Abrasionstester der Fa. Einlehner; Vorschrift: Abrasionsprüfvorschrift Nr. 414/ Normen und Richtlinien, Zellcheming-Vorschrift V/27.7/90), stellte sich dieser Effekt bei Verwendung von nass aufgemahlener Asche ein, der vorab die sandigen Grobteile mittels Cleaner oder Klassierer entzogen wurde (anschließend wurde mit gleicher Slurry-Aufbereitung weiterverfahren) . Die Asche wird dabei in wässrigem Milieu gemahlen und nicht in trockenem Zustand. Ein Cleaner ist ein Cyclonabscheider zur Schwer-Leicht-Fraktion-Trennung in dem eine Abtrennung von Sand erfolgt (Figur 3; Option mit Mahlung) .

Die weitergehende Reinigung von Grobpartikeln wurde anschließend in dem Aufschlämmbehälter mit einem weiteren Cleaner durchgeführt, wobei insgesamt ca. 15 - 25 % der eingesetzten Asche ausgeschleust wurden (lt. RFA-Analyse vornehmlich Sandpartikel/SiO₂).

Eine optimale Trennung von Sand/Alkalioxid ergab sich nach Verwendung von ca. 0,5-1 ppm anionischem Dispergiermittel im Aufschlämmbehälter, so dass mit einer entsprechenden Aufbereitung hauptsächlich die gewünschten oxidischen Komponenten dem Altpapier-Auflöseprozess zugeführt wurden und störender abrasiv wirkender inerter Sand ausgeschleust wurde. Ansonsten konnten die gleichen guten Ergebnisse bezüglich der Helligkeiten/ Weiße sowie sämtlicher Stoff- und Papierparameter erreicht werden wie beim Einsatz von NaOH. An den Papiermaschinen waren keine Veränderungen der Einstellungen notwendig.

Als optimale Einsatzmenge gilt eine Menge von 0,2% Asche bezogen auf den luftgetrockneten Altpapier-Eintrag. Während der mehrwöchigen Versuche wurde jedoch zwischen 0,1 bis 0,8% variiert. Allerdings waren bei höheren Einsatzmengen Eindickungsprobleme an den Scheibenfiltern zu verzeichnen, und es kam zu höheren Verlusten bei der Aufbereitung, so dass bevorzugt in einem Bereich zwischen 0,1 und 0,4% gearbeitet wurde. Hierbei wurden ähnlich positive Ergebnisse erreicht wie in Beispiel 2.

Ein positiver Effekt auf Y und Weiße (plus ca. 1 Punkt) konnte bei Verlegung der Fettsäuredosierung von den Auflösetrommeln in den Vorlagebehälter vor die Flotationszellen (nach dem Altpapier-Reaktionsturm sowie den Sortieraggregaten) erreicht werden. Dadurch bilden sich augenscheinlich stabilere Calciumseifen für die Flotation. Jedoch waren dabei auch ca. 2% höhere Verluste bei der Altpapier-Aufbereitung zu verzeichnen.

### Beispiel 4 nicht gemäß der Erfindung: Alkalisierung von Faser- und Holzstoffen für nachgeschaltete Peroxidbleichen

Asche-Slurry wurde gemäß der Aufbereitung nach Beispiel 3 in einer Konzentration von 8 - 12% einer Holzschliff- und einer (doppeltflotierten) AP-Stoff-Peroxidbleiche anstelle von NaOH zugegeben. Hierbei wurde zur Erzielung gleich guter Bleichergebnisse (wie beim Einsatz von NaOH) zur Standardrezeptur (1,6% H₂O₂/ 0,4% NaOH/ 0,55% Wasserglas/0,1% Komplexbildner) ca. die 2-3 fache Menge an Asche anstelle von 100% iger NaOH zugegeben.

In den Versuchsreihen wurden ausgehend von einer Helligkeit Y - 66% verschiedene Endhelligkeiten von 68/70/72 und 74 angefahren, wobei Komplexbildner konstant mit 0,1, Wasserglas zwischen 0,55 und 0,85 sowie H₂O₂ zwischen 1 bis 4% eingetragen wurden Je nach Helligkeitsanforderungen im Endstoff zur Papiermaschine werden unterschiedliche Mengen an H₂O₂ benötigt. Dementsprechend sind auch angepasste Rezepturen (H₂O₂/Wasserglas/NaOH bzw. Asche-Slurry oder Asche-Eluat sowie Komplexbildner notwendig. Je nach geforderter Endhelligkeit wurde NaOH in einer Größenordnung von 0,4 bis 1% ersetzt.

So konnte Holzschliff bei einer Stoffdichte (d.h. der . Faserstoffkonzentration) von ca. 30% und einer Bleichdauer von 2,5 h bei 70°C mit Asche-Slurry gebleicht werden, wobei 0,2% DTPA, 2,5% Wasserglas und 4-6% H₂O₂ (50%) eingesetzt wurden. 1,4% NaOH (50%) wurde hierbei durch 0,8% Asche (ofengetrocknet) ersetzt.

Durch den Einsatz von Asche-Slurry änderten sich weder die Papier- noch die Stoffqualitäten signifikant, wenn sie mittels dem Fachmann bekannter Standard-Labormethoden an Produkten der Papierindustrie untersucht wurden.

An den Papiermaschinen mussten während des laufenden Papierherstellungsprozess keine Verstellungen durchgeführt werden, um das Qualitätsniveau des fertigen Papiers auf entsprechendem Vergleichsniveau zu halten. Zeitweise musste lediglich die Alaundosierung von 0,6 auf 0,7 bis 0,8% erhöht werden, um die dem NaOH-Einsatz entsprechende Retention, Entwässerung und Formation an der Papiermaschine zu erhalten.

Bei der Bleiche von Holzschliff war dies nicht notwendig. Hierbei konnte NaOH in allen Fällen vollständig ersetzt werden. Es wurde eine Erhöhung der Ca-Härte von ca. 2°dH festgestellt. Der Einsatz von Komplexbildnern (DTPA) bei der Holzschliffbleiche konnte um bis zu 50%, der bei AP-Stoffbleiche bis zu 70% gegenüber der Standardrezeptur reduziert werden.

Zur Verringerung der Abrasivität wurde eine Nachmahlung der Asche nach Abscheidung von Grobpartikeln erfolgreich angewandt.

Die Einsatzmöglichkeit für die TMP (thermomechanical pulp)-Bleiche als NaOH-Ersatz wurde entsprechend erfolgreich im Labor an einem TMP-Stoffmodell mit der Standardrezeptur entsprechenden Praxisbedingungen getestet. Die geforderten Endhelligkeiten konnten erreicht werden.

### Beispiel 5:

### Verwendung von Asche zur Stabilisierung von Abwasserreinigungsanlagen

Der pH-Wert konnte ausgehend von einem stark schwankenden pH-Wert im Bereich von 6,8 bis 7,6 auf 7,8 bis 8,0 eingestellt werden.

Die Abwasseranlage wurde mit ca. 35 Tonnen CSB/d bei ca. 14.000m³ beschickt.

Für die Stabilisierung des pH-Werts und die Verringerung der Schwimmschlammneigung (darunter versteht man unter bestimmten Bedingungen aufschwimmenden Klärschlamm, der nicht in der Nachklärung (Sedimentationsbecken) abgesetzt werden kann und die nächste Stufe im Abbau der CSB/BSB-Fracht beeinträchtigt bzw. im Endablauf der Kläranlage als Schlamm übergeht und damit als CSB oder BSB die nachweispflichtigen Konzentrationen beeinträchtigt) wurden täglich ca. 2 bis 6 Tonnen Asche verwendet. Die Asche wurde entweder fest oder in fester Form einem Wasserstrahl zudosiert (Figur 4).

Die Neigung zur Bildung von Schwimmschlamm in den Nachklärbecken konnte um mehr als 80% verringert werden.

Generell konnte festgestellt werden, dass die Dosierung von Asche (gegebenenfalls mit Kalk) in die Abwasserreinigungsanlage durch den Einsatz im Altpapier-Aufbereitungsprozess während der mehrmonatigen in den Beispielen beschriebenen Versuche nicht mehr notwendig war, da bereits ein ausreichender alkalischer Puffer im Abwasser enthalten war.

Die Aufbereitung bzw. Dosierung erfolgt entsprechend dem Schema in Figur 4 über einen Aschebehälter, der mittels Austragsschnecke und Dosierband in einen Aufschlämmbehälter fördert und dann direkt der Abwasserreinigungsanlage vor den Belebungsbecken zugegeben wird. Eine trockene Zugabe der Asche in ausreichend turbulente Stellen (z.B. dem Zulauf des Belebungsbeckens bei Mischung des Rücklaufschlamm und Abwassers) war ebenso möglich. Das bedeutet, dass im vorliegenden Fall auch ohne vorherige Aufschlämmung im Wasserstrahl direkt in fester Form dosiert werden kann, da hier zwei Ströme in einem Kanal gemischt werden (hohe Turbulenzen, große Strömungsgeschwindigkeiten) vor Einlauf in das Belebungsbecken. Die H₂S-Ausgasung im Rücklauf schlamm fiel vorteilhaft von 10 - 20 ppm auf <2 ppm.

### Beispiel 6 nicht gemäß der Erfindung:

### Verwendung von Asche zur Konservierung von Faserreststoffen

Bei mehrwöchigen Heizkraftwerksstillständen (Revisionen) wird in der Papierfabrik bislang der Faserreststoff aus der Deinkinganlage mit Ca(OH)₂ bzw. CaO (Branntkalk) konserviert. Der Faserreststoff hat nach der Eindickung eine Restfeuchte von ca. 50% und wird in diesem Zustand als Brennstoff in das Heizkraftwerk gegeben. Dieser Faserreststoff fällt auch an, wenn ein Stillstand im Heizkraftwerk notwendig ist. Auch dann muss der Faserreststoff konserviert werden. Dabei erfolgt eine pH-Einstellung auf pH >12,0 um das Wachstum von Bakterien sowie die aerobe und anaerobe Zersetzung von Faserreststoffen (z.B. zu H₂S, Triethylamin usw.) zu verhindern.

Je nach Lagerungsdauer (Stillstandszeit des Heizkraftwerks + Wegarbeitungsdauer unter Normalbetrieb bis zu ca. 4 Monaten) wurden zwischen 1 bis 2,5% CaO bezogen auf den luftgetrockneten Faserreststoff zugegeben.

Behandelt wurden einmal 5000 t sowie 7000 t Faserreststoff (Deinkingschlämme aus Altpapieraufbereitung sowie Biologieüberschussschlamm (Schlamm welcher der Abwasseranlage bei der Umsetzung von CSB in Biomasse entzogen werden muss) als Mischung von 1:100. Beide Schlämme werden zusammen auf ca. 50% Trockengehalt eingedickt. Die Asche wurde homogen zum Faserreststoff (auf dem Band zugemischt (ca. 250 bzw. 210 t Asche).

Der Eintrag (trocken) erfolgte entsprechend dem Schema_(Figur 4) über die Austragsschnecke sowie anschließendes Dosierband direkt auf das Abfüllband des Faserreststoffes in die Beförderungscontainer zur Lagerungsstätte (kontinuierliche Einmischung bei Abfüllung) .

Im vorliegenden Fall wurden überraschend zuerst 2,5% respektive 1,5% CaO (bezogen auf die luftgetrockneten Faserreststoffe) erfolgreich durch 5% bzw. 3% Asche ersetzt. Der pH-Wert konnte während der Lagerung bei > 12 gehalten werden. Die Geruchsverminderung war wie bei einer Konservierung mit CaO deutlich reduziert.

### Beispiel 7 nicht gemäß der Erfindung:

### Verwendung von Asche im Kugelreaktor eines Gewebefilters als alkalisches Adsorptionsmittel anstelle von Kalk

In einem 63 MW-Heizkraftwerk in dem Faserreststoffe, Kunststoffreste sowie Althölzer verbrannt werden, wurde Asche als Kalkersatz vor einem Gewebefilter (nachgeschalteter Standardfilter) zur weitergehenden Rauchgasreinigung eingesetzt. Hierbei wird CaO durch eine ca. 2 bis 3fache Menge an Asche ersetzt. Die Zugabe erfolgt stöchiometrisch zur Menge an Rauchgas (Figur Nr: 5: Gewebefilter).

Genauer gesagt werden im Heizkraftwerk pro Stunde ungefähr 30 t Faserreststoffe verbrannt, wobei ca. 110.000 Nm³/h Rauchgas (max. 150.000 Nm³/h) entstehen. Hierbei werden die Abgase über einen E-Filter geleitet und anschließend wird das Rauchgas einem Adsorptionsreaktor (im vorliegenden Experiment handelt es sich um einen Kugelrotor-Reaktor) zugeleitet. In den Adsorptionsreaktor wird befeuchtete Aktivkohle und Asche (anstelle von herkömmlich verwendetem CaO oder Ca(OH)₂) gegeben. Aktivkohle und Asche werden dabei in der Regel getrennt zudosiert (sie können aber auch gemeinsam hinzu gegeben werden).

Anfänglich wurde dem Prozess Kalkhydrat zugeführt, später ausschließlich Asche in einer Menge von zunächst 200 und dann 100 kg/d sowie Aktivkohle in einer Menge von ca. 5kg/d. Die Partikelumlaufgröße im Reaktor beträgt ca. 100 bis 200g/m³.

Die Rohgaswerte konnten sowohl mit Ca(OH)₂, CaO wie auch mit Asche (3-fache stöchiometrische Menge an Alkalien bezogen auf CaO) deutlich unter die Grenzwerte des 17. Bundesimmissionschutzgesetzes gesenkt werden.

Die nachzuweisenden Emissions-Werte liegen zumeist im nicht nachweisbaren Bereich, und nur der SO₂-Wert liegt knapp darüber. Die SO₂-Reduzierung beträgt ca. 99,6%.

Bei den Vorversuchen im Technikum eines Herstellers von Gewebefiltern kamen sogenannte Turbosorp-Reaktoren zum Einsatz. Der Ascheeinsatz konnte mengenmäßig durch Verwendung von E-Filterasche (Elektrofilterasche mit einem höheren Anteil an CaO und einer größeren Partikelfeinheit) optimiert werden. Diese besitzt eine kleinere mittlere Partikelgrößenverteilung und einen höheren Anteil an alkalischen Oxidkomponenten als die mit inertem SiO₂ (aus dem Wirbelbett) beladene Asche, so dass mittlerweile ausschließlich E-Filterasche großtechnisch zum Einsatz kommt. Durch Verwendung eines Befeuchtungsmischers steht im Gegensatz zur Trockenadsorption (ohne Mischer) praktisch der gesamte Anteil an reaktiven und auch trägen alkalischen Komponenten zur Verfügung. Dadurch wird ein deutlich geringeres Verhältnis (Reduzierung der 3-fachen auf die 2,5 bis 2-fache Menge) für die Abscheidung benötigt. Der Einsatz der Asche ist in der Figur 5 genauer gezeigt. Es können alle Komponenten einzeln oder in beliebiger Mischung oder hintereinander in beliebiger Reihenfolge eingesetzt werden

### Beispiel 8 nicht gemäß der Erfindung:

### Verwendung von Asche-Eluat als NaOH-Eratz im alkalischen Wäscher

Vor dem Umbau auf einen Gewebefilter im oben genannten Heizkraftwerk wurde im Rauchgasstrom nach dem E-Filter ein alkalischer Wäscher betrieben. In dem Wäscher wurde mit Hilfe von NaOH ein pH-Wert von >7,0 gehalten. Der Durchlauf im Wäscher betrug ca. 15 m³/h Frischwasser, wozu ca. 10 - 50 kg 50%ige NaOH pro Tag benötigt wurde. Durch Einsatz von Asche-Eluat (mit Ansatz 20 g/l), konnte NaOH vollständig ersetzt werden. Über einen mehrmonatigen Zeitraum wurde keine Ausfällung beobachtet. Zum Einsatz kamen ca. 20 bis 100 kg (E-Filterasche) Asche pro Tag (Figur Nr.2). (9)

## Patentansprüche

1. Verwendung von Asche zur Alkalisierung eines wässrigen Systems, wobei das wässrige System ausgewählt ist aus einer Gruppe bestehend aus industriellen, kommunalen und häuslichen Abwässern, wobei das Abwasser durch Zugabe von 0,001 bis 1 Gew.-% Asche, bezogen auf das Abwasser, bei einem pH > 7 stabilisiert wird.

2. Verwendung gemäss Anspruch 1, wobei die Asche chemisch oder physikalisch modifiziert ist.

3. Verwendung gemäss irgendeinem der vorhergehenden Ansprüche zur Einstellung der Wasserhärte des wässrigen Systems.

4. Verwendung gemäss irgendeinem der vorhergehenden Ansprüche zur Ausbildung eines chemischen Gleichgewichts in dem wässrigen System.

5. Verwendung gemäss irgendeinem der vorhergehenden Ansprüche, wobei die Asche mit Salpetersäure HNO₃ kombiniert ist.

## Claims

1. Use of ash to alkalise an aqueous system, wherein the aqueous system is selected from a group consisting of industrial, communal and domestic wastewater, wherein the wastewater is stabilised at a pH > 7 by the addition of 0.001 to 1 wt.% ash, relative to the wastewater.

2. Use according to claim 1, wherein the ash is chemically or physically modified.

3. Use according to any of the preceding claims to adjust the water hardness of the aqueous system.

4. Use according to any of the preceding claims to produce a chemical equilibrium in the aqueous system.

5. Use according to any of the preceding claims, wherein the ash is combined with nitric acid HNO₃.

## Revendications

1. Utilisation de cendres pour l'alcalinisation d'un système aqueux, dans laquelle le système aqueux est choisi dans un groupe consistant en des eaux usées industrielles, urbaines et domestiques, dans laquelle les eaux usées sont stabilisées par l'ajout de 0,001 à 1 % en poids de cendres, par rapport aux eaux usées, à un pH > 7.

2. Utilisation selon la revendication 1, dans laquelle la cendre est modifiée chimiquement ou physiquement.

3. Utilisation selon l'une quelconque des revendications précédentes pour l'ajustement de la dureté de l'eau du système aqueux.

4. Utilisation selon l'une quelconque des revendications précédentes pour la réalisation d'un équilibre chimique dans le système aqueux.

5. Utilisation selon l'une quelconque des revendications précédentes, dans laquelle la cendre est associée à de l'acide nitrique HNO₃.
